# EUROPÄISCHE PATENTSCHRIFT

(11) **EP 2 940 373 B1**
(45) Veröffentlichungstag und Bekanntmachung des Hinweises auf die Patenterteilung: **31.05.2017**
(21) Anmeldenummer: 14166196.7
(22) Anmeldetag: 28.04.2014
(51) Int. Cl.: F21S 8/04, H02J 9/02, F21V 21/28, F21V 23/00, F21W 131/205, F21S 9/02, H02J 9/06

(54) **Erstausfallsichere Operationsleuchte**
Initial failure-proof operation light
Lampe chirurgicale à sûreté intégrée

(43) Veröffentlichungstag der Anmeldung: 04.11.2015
(73) Patentinhaber: Karl Leibinger Medizintechnik GmbH & Co. KG, 78570 Mühlheim/Donau (DE)
(72) Erfinder: Strölin, Joachim, 78604 Rietheim (DE)
(74) Vertreter: Winter, Brandl, Fürniss, Hübner, Röss, Kaiser, Polte - Partnerschaft mbB

(56) Entgegenhaltungen:
- EP-A1- 2 708 802
- US-A- 5 808 680

## Beschreibung

Die Erfindung betrifft eine Operationsleuchte zur Ausleuchtung eines Operationsbereiches, mit einem, zumindest eine erste und eine zweite Leuchteinheit aufnehmenden, gehäuseartigen Leuchtenkörper / Leuchtengehäuse sowie mit einer ersten Stromversorgungsleitung, die zum Zuführen von elektrischem Strom von einer ersten Spannungsquelle zu zumindest einer Lichtquelle der ersten Leuchteinheit mit der ersten Leuchteinheit elektrisch verbunden ist.

Solche Operationsleuchten sind bereits im Stand der Technik offenbart. So ist der Anmelderin beispielsweise Stand der Technik bekannt, der mit der Veröffentlichungsnummer EP 2 708 802 A1 veröffentlicht ist, und ursprünglich als europäische Patentanmeldung EP 121 84 617 beim Europäischen Patentamt eingereicht worden ist, worin eine Operationsleuchte mit einem Leuchtenkörper beschrieben ist. In diesem Leuchtenkörper ist zumindest ein Leuchtmodul zum Erhellen eines Operationsbereiches verbaut. Ein wiederum am Leuchtenkörper angebrachtes Verlängerungsbauteil weist einen Anbringbereich zur Befestigung an einer Wand oder einem fahrbaren Untersatz auf, wobei wenigstens ein Akkumulator in zumindest einem, vom Anbringbereich aus gesehen, leuchtenkörperseitigen Abschnitt der Operationsleuchte angeordnet ist.

Bei diesem Stand der Technik kann es jedoch unter bestimmten Umständen vorkommen, dass es zu einem ungewollten Ausfall der Operationsleuchte kommt. Insbesondere, wenn während einer Operation längere Zeit keine Netzspannung an der Operationsleuchte anliegt und sich der Akkumulator rasch entlädt, droht der gesamte Ausfall der Leuchte, woraus wiederum erhebliche Risiken für die zu behandelnde Person unterhalb der Operationsleuchte entstehen.

Es ist daher Aufgabe der vorliegenden Erfindung, Operationsleuchten insbesondere für einen ersten Fehler ausfallsicherer zu machen.

Ein erster Fehler kann hierbei beispielsweise ein Bruch der ersten Stromversorgungsleitung innerhalb oder außerhalb der Operationsleuchte, ein Fehler in einem Koppelelement, das die Stromversorgungsleitung umlenkt, ein Ausfall einer Sicherung, einer Lichtquelle, einem Fehler in der Isolierung, einem Fehler in Elektronikbauteilen der Operationsleuchte oder ein Lösen der Anschlussleitung an der Operationsleuchte sein.

Die erfindungsgemäße Aufgabe wird dadurch gelöst, dass die zweite Leuchteinheit des Leuchtenkörpers zumindest eine weitere Lichtquelle aufweist und an eine, getrennt zur ersten Stromversorgungsleitung ausgebildete, zweite Stromversorgungsleitung angeschlossen ist, mittels der eine zweite Spannungsquelle mit der zweiten Leuchteinheit elektrisch verbindbar ist.

Durch diese zweite Stromversorgungsleitung ist jede Leuchteinheit an eine eigene Stromquelle, die in Krankenhäusern grundsätzlich vorhanden sind, anschließbar. Im Betrieb der Operationsleuchte ist stets eine der Leuchteinheiten der Operationsleuchte mit Strom versorgt, auch wenn eine der beiden ausfällt. Dies erhöht wesentlich die Ausfallsicherheit der kompletten Operationsleuchte und ermöglicht auch bei einem längeren Ausfall einer an die erste Stromversorgungsleitung angeschlossenen Spannungsquelle einen gesicherten Betrieb der Operationsleuchte. Da die beiden, die jeweilige Leuchteinheit versorgenden Stromversorgungsleitungen getrennt / separat / unabhängig voneinander ausgestaltet sind, ist die Operationsleuchte auch bei einem Versagen einer Stromversorgungsleitung immer noch funktionstüchtig. Dadurch wird das Fehlerrisiko bei der Behandlung eines Patienten, der sich unterhalb der Operationsleuchte befindet, wesentlich reduziert.

Weitere vorteilhafte Ausführungen sind in den Unteransprüchen beansprucht und nachfolgend näher erläutert.

Nach einer weiteren Ausführungsform ist es von Vorteil, wenn der Leuchtenkörper mit einem translatorisch und / oder rotatorisch bewegbaren Haltearmsystem verbunden ist, welches Haltearmsystem vorzugsweise einen decken- und / oder wandseitigen Befestigungsbereich aufweist, wobei innerhalb des Haltearmsystems die erste Stromversorgungsleitung und / oder die zweite Stromversorgungsleitung geführt ist. Dadurch ist eine einfache Integration beider Stromversorgungsleitungen in der Operationsleuchte möglich.

Vorteilhaft ist es zudem, wenn das Haltearmsystem mehrere, vorzugsweise schräg zueinander angeordnete, und relativ zueinander bewegbare Halteabschnitte aufweist, wobei zumindest ein erster Halteabschnitt mittels eines Drehgelenkes verdrehbar gegenüber einem zweiten Halteabschnitt angeordnet ist.

In diesem Zusammenhang ist es zweckmäßig, wenn die erste Stromversorgungsleitung im Bereich des Drehgelenkes ein elektrisch leitendes Koppelelement aufweist und / oder die zweite Stromversorgungsleitung im Bereich des Drehgelenkes ein elektrisch leitendes Koppelelement aufweist. Das Koppelelement ist vorzugsweise als Drehstecker ausgeführt oder aus zumindest einem Schleifring bestehend, wodurch jede Stromversorgungsleitung knicksicher im Haltearmsystem geführt ist. Dadurch wird die Führung der beiden Stromversorgungsleitungen innerhalb des Haltearmsystems sowie der Operationsleuchte weiter verbessert.

Auch ist es zweckmäßig, wenn die erste Stromversorgungsleitung dreipolig (d.h., wenn die erste Stromversorgungsleitung drei Litzen/Adern (Plus-/Minus-Erde) umfasst) ausgeführt ist. Auch die zweite Stromversorgungsleitung ist dabei vorzugsweise derartig dreipolig (umfassend drei Litzen / Adern (Plus-/Minus-Erde) ausgeführt. Dadurch wird eine besonders leistungsfähige Stromversorgung zur Verfügung gestellt.

Ist ein erster, einen Prozessor aufweisender Steuerelektronikbereich mit der ersten Stromversorgungsleitung (und vorzugsweise auch mit der zweiten Stromversorgungsleitung) elektrisch verbunden, kann weiterhin die Steuerung der an der ersten Stromversorgungsleitung angeschlossenen ersten Leuchteinheit direkt gesteuert werden.

In diesem Zusammenhang ist es auch von Vorteil, wenn ein zweiter, einen Prozessor aufweisender Steuerelektronikbereich mit der zweiten Stromversorgungsleitung (und vorzugsweise auch mit der ersten Stromversorgungsleitung) elektrisch verbunden ist, wodurch auch die zweite Leuchteinheit, die an der zweiten Stromversorgungsleitung angeschlossen ist, möglichst direkt steuerbar ist.

Weiterhin ist es von Vorteil, wenn der erste Steuerelektronikbereich und der zweite Steuerelektronikbereich auf einer gemeinsamen Platine angeordnet sind. Dadurch wird der Bauraum der beiden Steuerelektronikbereiche wesentlich kompakter. Alternativ dazu kann jedoch auch jeder der beiden ersten und zweiten Steuerelektronikbereiche auf einer separaten Platine ausgestaltet sein, wobei in diesem Falle dann die einzelnen Steuerelektronikbereiche räumlich trennbar wären, wodurch die Ausfallsicherheit weiter erhöht werden kann.

Vorteilhaft ist es zudem, wenn der erste Steuerelektronikbereich und der zweite Steuerelektronikbereich in dem Leuchtenkörper integriert sind. Dadurch wäre die Operationsleuchte noch kompakter ausgestaltbar.

Ist der Prozessor des ersten Steuerelektronikbereiches und / oder der Prozessor des zweiten Steuerelektronikbereiches mit der zumindest einen Lichtquelle der ersten Leuchteinheit elektrisch verbunden und / oder mit der zumindest einen Lichtquelle der zweiten Leuchteinheit elektrisch verbunden, kann der Prozessor auf direktem Wege, etwa das Ein- und Ausschalten, die Lichtquelle / -n der jeweiligen Leuchteinheit steuern.

In diesem Zusammenhang ist es auch von Vorteil, wenn der Prozessor des ersten Steuerelektronikbereiches als ein Slave-Prozessor oder als ein Master-Prozessor ausgebildet ist und / oder der Prozessor des zweiten Steuerelektronikbereiches als ein Slave-Prozessor oder ein Master-Prozessor ausgebildet ist. Dann ist die Steuerung noch weiter verbessert. Wenn etwa der Prozessor des ersten Steuerelektronikbereiches als Master-Prozessor ausgeführt ist, ist vorzugsweise der Prozessor des zweiten Steuerelektronikbereiches als Slave-Prozessor ausgestaltet. Wenn weiter bevorzugt der Prozessor des ersten Steuerelektronikbereiches als Slave-Prozessor ausgestaltet ist, ist der Prozessor des zweiten Steuerelektronikbereiches als Master-Prozessor ausgebildet.

Zweckmäßig ist es auch, wenn die erste Stromversorgungsleitung (vorzugsweise mit einer Klemme) zum Anschluss an eine erste Spannungsquelle, etwa eine (eine Wechsel- oder Gleichspannung zwischen 100 bis 250 Volt erzeugende) Netzspannungsquelle oder eine Notstromversorgungsquelle oder eine (eine Wechsel- oder Gleichspannung zwischen 12 und 60 Volt erzeugende) Schutzkleinspannungsquelle, vorbereitet ist. Dann ist die Operationsleuchte an die üblichen, in Operationssälen bereits vorhandenen / integrierten Stromleitungen anschließbar und absicherbar. Dadurch wird insbesondere der Aufbau weiter vereinfacht, wodurch v. a. die Herstellungskosten gesenkt werden.

In diesem Zusammenhang ist es auch vorteilhaft, wenn die zweite Stromversorgungsleitung zum Anschluss an eine zweite Spannungsquelle, etwa eine (eine Wechsel- oder Gleichspannung zwischen 100 bis 250 Volt erzeugende) Netzspannungsquelle oder eine Notstromversorgungsquelle oder eine (eine Wechsel- oder Gleichspannung zwischen 12 und 60 Volt erzeugende) Schutzkleinspannungsquelle vorbereitet ist. Somit kann auch die zweite Stromversorgungsleitung an die bereits vorhandenen Netze im Operationssaal angeschlossen werden.

Weiterhin ist es auch möglich, die beiden Stromversorgungsleitungen über eine gemeinsame Umschaltvorrichtung / eine Umschaltung mit der ersten und zweiten Spannungsquelle zu verbinden. Eine solche Umschaltung würde etwa mittels einer Klemme jeder Stromversorgungsleitung an die Operationsleuchte angeschlossen werden und ermöglicht eine rasche Umschaltung bei einem Ausfall einer Spannungsquelle. Dadurch wird die Ausfallsicherheit weiter verbessert.

Zudem ist es von Vorteil, wenn mindestens ein Akkumulator mit der ersten Stromversorgungsleitung und / oder mit der zweiten Stromversorgungsleitung verbunden ist, wobei der mindestens eine Akkumulator vorzugsweise in dem Leuchtenkörper angeordnet ist. Dadurch wird eine zusätzliche Ausfallsicherheit ermöglicht. Beispielsweise sind beide Stromversorgungsleitungen an den gleichen Akkumulator angeschlossen oder, besonders bevorzugt, ist jede der beiden Stromversorgungsleitungen an einen eigenen Akkumulator angeschlossen.

Der zumindest eine Akkumulator oder die beiden Akkumulatoren wären dann weiter bevorzugt beide in dem Leuchtenkörper aufgenommen, um eine kompakte Bausweise der Operationsleuchte zu verwirklichen.

Die Erfindung wird nun nachfolgend anhand einer Figur näher erläutert, wobei mehrere Ausführungsformen erläutert sind.

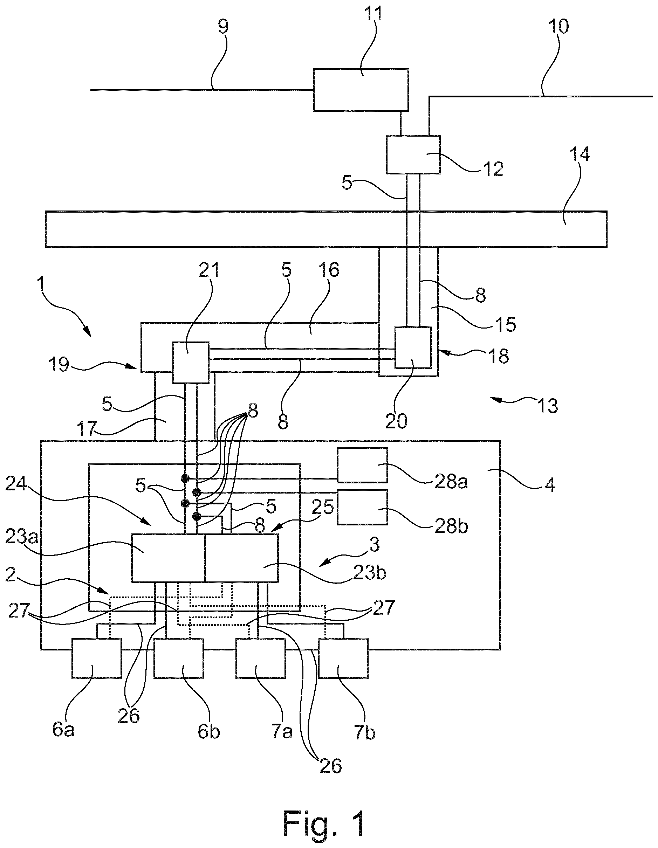

Es zeigt die einzige Figur 1 eine schematische Darstellung einer erfindungsgemäßen Operationsleuchte nach einer bevorzugten (ersten) Ausführungsform, wobei insbesondere die Anordnung sowie die Anschlüsse der beiden Stromversorgungsleitungen innerhalb der Operationsleuchte verdeutlicht sind.

Die Figur ist lediglich schematischer Natur und dient ausschließlich dem Verständnis der Erfindung. Die gleichen Elemente sind mit denselben Bezugszeichen versehen.

In Fig. 1 ist eine erfindungsgemäße Operationsleuchte 1 nach einer ersten Ausführungsform dargestellt. Die Operationsleuchte 1 ist schematisch dargestellt, wobei insbesondere die interne Schaltung und Verkabelung zu erkennen ist. Die Operationsleuchte 1 dient dabei zur Ausleuchtung eines hier der Übersichtlichkeit nicht weiter dargestellten Operationsbereiches, das heißt jenem Bereich, in dem ein Patient behandelt und/oder operiert wird. Die Operationsleuchte 1 weist einen Leuchtenkörper 4 auf, der eine erste Leuchteinheit 2 und eine zweite Leuchteinheit 3 aufweist. Die beiden Leuchteinheiten 2 und 3 sind innerhalb des gehäuseartigen Leuchtenkörpers 4 aufgenommen und gehalten. Auch weist die Operationsleuchte 1 eine erste Stromversorgungsleitung 5 auf, die elektrisch mit der ersten Leuchteinheit 2 verbunden ist und dadurch zum Zuführen von elektrischem Strom von einer ersten, hier der Übersichtlichkeit halber nicht weiter dargestellten Spannungsquelle zu zumindest einer Lichtquelle 6a, 6b dieser ersten Leuchteinheit 2 dient. Auch die zweite Leuchteinheit 3 des Leuchtenkörpers 4 weist zumindest eine weitere Lichtquelle 7a, 7b, nämlich mehrere Lichtquellen 7a, 7b, auf und ist wiederum an einer, getrennt zur ersten Stromversorgungsleitung 5 ausgebildeten, zweiten Stromversorgungsleitung 8 elektrisch leitend angeschlossen. Die zweite Stromversorgungsleitung 8 stellt eine elektrische Verbindung einer der Übersichtlichkeit halber nicht weiter dargestellten zweiten Spannungsquelle mit der zweiten Leuchteinheit 3 dar.

Die erste Stromversorgungsleitung 5 ist zudem derart vorbereitet, dass sie an die erste Spannungsquelle anschließbar ist. Eine erste Spannungsquelle ist vorzugsweise als eine Netzspannungsquelle, die eine Wechsel- oder Gleichspannung zwischen 100 bis 250 Volt erzeugt, weiter bevorzugt als eine Notstromversorgungsquelle, oder noch weiter bevorzugt als eine, eine Wechsel- oder Gleichspannung zwischen 12 und 60 Volt erzeugende Schutzkleinspannungsquelle ausgestaltet. Die erste Spannungsquelle ist üblicherweise mittels zumindest einer ersten Hausnetzversorgungsleitung 9 mit der ersten Stromversorgungsleitung 5 der Operationsleuchte 1 verbindbar. Die zweite Stromversorgungsleitung 8 ist wiederum zum Anschluss an zumindest eine zweite Hausnetzversorgungsleitung 10 vorbereitet, welche zweite Hausnetzversorgungsleitung wiederum mit der zweiten, von der ersten Spannungsquelle getrennten Spannungsquelle verbunden ist. Die zweite Spannungsquelle ist ebenfalls vorzugsweise als eine, eine Wechsel-oder Gleichspannung zwischen 100 bis 250 erzeugende Netzspannungsquelle oder weiter bevorzugt als eine Notstromversorgungsquelle oder, weiter bevorzugt als eine, eine Wechsel- oder Gleichspannung zwischen 12 und 60 Volt erzeugende Schutzkleinspannungsquelle ausgestaltet. Sowohl die erste als auch die zweite Hausnetzversorgungsleitung 9, 10 sind Versorgungsleitungen, die bereits im bestehenden Krankenhaussystem vorhanden sind. Dadurch sind bereits im Krankenhaus und in dem jeweiligen Operationssaal, in dem die Operationsleuchte 1 zu installieren ist, zwei voneinander unabhängige Hausnetzversorgungsleitungen 9 und 10 vorhanden, um für den Fall eines Ausfalls einer der beiden Spannungsquellen zwei unabhängig voneinander bestehende Strom- / Spannungsversorgungen zur Verfügung zu stellen.

Wie weiterhin zu erkennen ist, ist in der ersten Hausnetzversorgungsleitung 9 ein Schaltnetzteil (SNT) 11 integriert und mit dieser Leitung 9 verschalten. Dieses Schaltnetzteil 11 kann alternativ dazu auch als Transformator ausgestaltet sein.

Die erste Hausnetzversorgungsleitung 9 sowie die zweite Hausnetzversorgungsleitung 10 sind mittels einer Umschaltvorrichtung 12, die in der Operationsleuchte 1 integrierbar ist, in dieser Ausführungsform jedoch Teil des Operationssaales ist, mit der Operationsleuchte 1 (im Betrieb der Operationsleuchte 1) wechselweise / wahlweise elektrisch verbunden und angeschlossen. Die Umschaltvorrichtung 12 ist dabei derart ausgestaltet, dass sie die jeweils aktive Spannungsquelle (erste oder zweite Spannungsquelle) im Betrieb mit beiden Stromversorgungsleitungen 5 und 8 elektrisch verbunden ist. Die erste Stromversorgungsleitung 5 und die zweite Stromversorgungsleitung 8 sind jeweils mittels hier der Übersichtlichkeit halber nicht weiter dargestellten Klemmen an der Umschaltvorrichtung 12 angeschlossen.

Bei einem Versagen / Ausfall der ersten Spannungsquelle schaltet die Umschaltvorrichtung 12 automatisch von der ersten Hausnetzversorgungsleitung 9 auf die zweite Hausnetzversorgungsleitung 10 um, wodurch sowohl die erste Stromversorgungsleitung 5 als auch die zweite Stromversorgungsleitung 8 weiterhin mit Strom (elektrischer Energie) versorgt sind.

Die Operationsleuchte 1 ist in der dargestellten Ausführungsform als eine Deckenleuchte ausgestaltet, die den Leuchtenkörper 4 über ein Haltearmsystem 13 mit einer Decke 14 des Operationssaales verbindet. Die Decke 14 ist in Fig. 1 schematisch als Längsbalken dargestellt. Das Haltearmsystem 13 weist mehrere Halteabschnitte 15, 16, 17 auf, die relativ zueinander rotatorisch / verdrehbar und translatorisch / verschiebbar sind.

Ein erster Halteabschnitt 15 des Haltearmsystems 13 ist unmittelbar an der Decke 14 mittels hier nicht weiter dargestellten Befestigungselementen, wie Schrauben, befestigbar / befestigt. Der erste Halteabschnitt 15 ist im Wesentlichen (nach Fig. 1 betrachtet) mit seiner Längsrichtung in vertikaler Richtung erstreckend / ausgerichtet und über einen zweiten Halteabschnitt 16 mit einem dritten Halteabschnitt 17 verbunden. Der erste Halteabschnitt 15 ist mittels eines ersten Drehgelenkes 18 mit dem zweiten Halteabschnitt 16 verbunden, wodurch der zweite Halteabschnitt 16, der im Wesentlichen in der Fig. 1 horizontal verläuft / mit seiner Längsrichtung horizontal ausgerichtet ist, relativ zu dem in Fig. 1 vertikal verlaufenden, ersten Halteabschnitt 15 rotatorisch bewegbar ist. Der dritte Halteabschnitt 17, der wiederum mittels eines zweiten Drehgelenkes 19 mit dem zweiten Halteabschnitt 16 verbunden ist, ist relativ zu dem zweiten Halteabschnitt 16 rotatorisch bewegbar. Der dritte Halteabschnitt 17 ist in dieser Ausführungsform unmittelbar fest mit dem Leuchtenkörper 4 verbunden, alternativ dazu ist es jedoch auch möglich, noch weitere armförmige Halteabschnitte, wie sie durch die Halteabschnitte 15 bis 17 ausgestaltet sind, vorzusehen und zwischen dem dritten Halteabschnitt 17 und dem Leuchtenkörper 4 anzuordnen.

Die drei Halteabschnitte 15, 16 und 17 sind zur Führung der ersten und zweiten Stromversorgungsleitungen 8, 5 ausgestaltet. Dafür weisen die Halteabschnitte 15, 16 und 17 einen in Längsrichtung mittig verlaufenden Hohlraum auf. In diesem Hohlraum / Innenraum sind die beiden Stromversorgungsleitungen 5 und 8 jeweils angeordnet und geführt. Im Bereich des jeweiligen Drehgelenks 18, 19 ist die erste Stromversorgungsleitung 5 sowie die zweite Stromversorgungsleitung 8 mittels Koppelelementen, die als Drehstecker ausgestaltet sind und hier schematisch dargestellt sind, umgelenkt und geteilt.

Die erste Stromversorgungsleitung 5 ist mittels einer ersten Drehsteckereinheit umgelenkt, in welcher ersten Drehsteckereinheit der erste Drehstecker integriert ist. Dabei ist ein erster Leitungsabschnitt der ersten Stromversorgungsleitung 5, der auf einer dem Leuchtenkörper 4 abgewandten Seite an den ersten Drehstecker anschließt, mittels des ersten Drehsteckers mit einem zweiten Leitungsabschnitt der ersten Stromversorgungsleitung 5 elektrisch verbunden, welcher zweite Leitungsabschnitt in Richtung des zweiten Drehgelenks 19 an den ersten Drehstecker anschließt. Der erste und der zweite Leitungsabschnitt sind daher relativ zueinander verdrehbar.

Ein zweiter Drehstecker der ersten Drehsteckereinheit 20 ist wiederum dafür vorgesehen, die zweite Stromversorgungsleitung 8 umzulenken. Dabei ist ein erster Leitungsabschnitt der zweiten Stromversorgungsleitung auf einer dem Leuchtenkörper 4 abgewandten Seite an diesem zweiten Drehstecker angeschlossen und ein zweiter Leitungsabschnitt der zweiten Stromversorgungsleitung 8 in Richtung des zweiten Drehgelenks 19 an das zweite Drehgelenk angeschlossen. Dadurch sind der erste und der zweite Leitungsabschnitt der zweiten Stromversorgungsleitung 8 wiederum relativ zueinander verdrehbar. Die erste Drehsteckereinheit 18 ist innerhalb des Drehgelenks 18 angeordnet, wodurch eine besonders kompakte Bauweise zustande kommt.

Im zweiten Drehgelenk 19 ist wiederum eine zweite Drehsteckereinheit 21 angeordnet, die wie die erste Drehsteckereinheit 20 ausgebildet ist und wiederum je zwei Abschnitte (den zweiten Leitungsabschnitt und einen dritten Leitungsabschnitt) der ersten und zweiten Stromversorgungsleitung 8 und 5 verdrehbar zueinander umlenkt.

Alternativ zu den das Koppelelement ausbildenden Drehsteckern der Drehsteckereinheiten 20, 21 ist es auch möglich, diese Drehsteckereinheiten 20, 21 als Schleifringeinheiten auszugestalten, wobei dann jeweils zwei Schleifringe verdrehbar zueinander angeordnet sind sowie als elektrisches Verbindungselement in der jeweiligen ersten oder zweiten Stromversorgungsleitung 5, 8 vorgesehen sind.

Jede der Stromversorgungsleitungen 5 und 8 ist dreipolig ausgestaltet und weist jeweils eine Plus-, eine Minus- und eine Erdeleitung auf.

Neben der rotatorischen Bewegung der drei Halteabschnitte 15 bis 17 zueinander, sind die Halteabschnitte 15 bis 17 auch translatorisch zueinander verschiebbar, wobei die jeweiligen Stromversorgungsleitungen 5 und 8 innerhalb der Halteabschnitte 15 bis 17 unter Ausbildung mehrerer Schlaufen (hier der Übersichtlichkeit halber nicht dargestellt) angeordnet sind, so dass die Stromversorgungsleitungen 5 und 8 in ihrer Länge aus- und einfahrbar / veränderbar sind.

Wie weiterhin besonders gut in Fig. 1 zu erkennen ist, sind beide Stromversorgungsleitungen 5 und 8 mit einer Steuerelektronik 22, nämlich einer Platine, elektrisch verbunden. Die Steuerelektronik 22 weist dabei in einem ersten Steuerelektronikbereich 24 einen ersten Prozessor 23a auf und in einem zweiten Steuerelektronikbereich 25 einen zweiten Prozessor 23b auf. Alternativ zu der Ausgestaltung der beiden Steuerelektronikbereiche 24 und 25 auf einer Platine ist es auch möglich, die jeweiligen Steuerelektronikbereiche 24 und 25 auf getrennten Steuerelektroniken / Platinen anzuordnen.

Der erste Prozessor 23a des ersten Steuerelektronikbereiches 24 ist als ein Slaveprozessor ausgestaltet. Alternativ dazu kann er jedoch auch als ein Masterprozessor ausgestaltet sein, wenn der zweite Prozessor 23b des zweiten Steuerelektronikbereiches 25 als Slaveprozessor ausgestaltet ist. Der zweite Prozessor 23b ist wiederum als Masterprozessor ausgestaltet, kann jedoch auch, wenn der erste Prozessor 23a des ersten Steuerelektronikbereiches 24 als Masterprozessor ausgestaltet ist, als Slaveprozessor ausgestaltet sein.

Die erste Stromversorgungsleitung 5 ist elektrisch leitend mit dem ersten Prozessor 23a verbunden. Die zweite Stromversorgungsleitung 8 ist mit dem zweiten Prozessor 23b elektrisch leitend verbunden. In der Ausführungsform nach Fig. 1 ist die erste Stromversorgungsleitung 5 weiterhin wiederum redundant ebenfalls mit dem zweiten Prozessor 23b verbunden. Auch die zweite Stromversorgungsleitung 8 ist redundant mit dem ersten Prozessor 23a verbunden. Dadurch ist eine redundante Versorgung der beiden Prozessoren 23a und 23b gewährleistet und auch bei einem Ausfall einer Stromversorgungsleitung der Betrieb beider Prozessoren möglich. Der erste Prozessor 23a des ersten Steuerelektronikbereiches 24 ist, wie es durch die durchgezogenen Verbindungsleitungen 26 gekennzeichnet ist, mit mehreren, nämlich zwei Lichtquellen 6a und 6b elektrisch leitend verbunden. Jede der Lichtquellen 6a, 6b ist vorzugsweise als eine LED-Lampe ausgestaltet. Alternativ dazu ist es jedoch auch möglich, jede der Lichtquellen als ein Array an LED's auszugestalten. Zudem sind nicht nur zwei erste Lichtquellen 6a und 6b mit dem ersten Prozessor 23a verbunden, sondern noch deutlich mehrere, das heißt mehr als zwei Lichtquellen 6a, 6b.

Der zweite Prozessor 23b ist über Verbindungsleitungen 26 (durch durchgezogenen Strich dargestellt) mit der ersten Lichtquelle 7a und der zweiten Lichtquelle 7b der zweiten Leuchteinheit 3 elektrisch leitend verbunden und versorgt daher die Lichtquellen 7a, 7b mit elektrischer Energie. Auch diese Lichtquellen 7a und 7b sind wiederum als LED's oder als ein Array an LED's ausgeführt, wobei vorzugsweise die zweite Leuchteinheit 3 mehr als zwei Lichtquellen 7a und 7b aufweist.

Alternativ, wie es durch die gestrichelt dargestellten Verbindungsleitungen 27 angedeutet ist, kann die erste Lichtquelle 6a und die zweite Lichtquelle 6b der ersten Leuchteinheit 2 neben der Verbindung mit dem ersten Prozessor 23a auch gleichzeitig, redundant mit dem zweiten Prozessor 23b verbunden sein. Zudem, wie ebenfalls durch die gestrichelt dargestellten Verbindungsleitungen 27 angedeutet, sind in dieser Alternative auch die beiden Lichtquellen 7a und 7b der zweiten Leuchteinheit 3 sowohl mit dem zweiten Prozessor 23b als auch redundant mit dem ersten Prozessor 23a elektrisch leitend verbunden.

Die jeweiligen Lichtquellen 6a, 6b und 7a, 7b sind fest im gehäuseartigen Leuchtenkörper 4 platziert / gehalten / befestigt. Die erste Leuchteinheit 2 umfasst die Lichtquellen 6a und 6b, die Verbindungsleitungen 26 (in der alternativen Ausgestaltung, wie sie durch die gestrichelten Linien dargestellt ist Verbindungsleitungen 26 und 27) sowie den ersten Steuerelektronikbereich 24 samt erstem Prozessor 23a. Die zweite Leuchteinheit 3 umfasst wiederum die Lichtquellen 7a und 7b, die beiden Verbindungsleitungen 26 (in der alternativen Ausgestaltung, wie sie durch die gestrichelten Linien dargestellt ist Verbindungsleitungen 26 und 27) sowie den zweiten Steuerelektronikbereich 25 samt zweitem Prozessor 23b.

Ebenfalls im Leuchtenkörper 4 sind zweite Akkumulatoren 28a und 28b vorhanden, die als zusätzliche Absicherung der Stromversorgung dienen. Ein erster Akkumulator 28a ist elektrisch leitend mit der ersten Stromversorgungsleitung 5 verbunden und wird bei elektrischer Versorgung der ersten Stromversorgungsleitung 5 durch die erste oder zweite Spannungsquelle mit Strom versorgt und ggf. aufgeladen. In einem Fall, in dem beide Spannungsquellen ausfallen sollten, dient der erste Akkumulator 28a dann als Versorgungselement zum Betreiben des ersten und / oder zweiten Prozessors 23a und 23b, um die Lichtquellen 6a, 6b und / oder 7a, 7b weiter zu betreiben. Weiterhin ist noch ein zweiter Akkumulator 28b vorhanden, der wiederum mit der zweiten Stromversorgungsleitung 8 elektrisch leitend verbunden ist. Bei elektrischer Versorgung der zweiten Stromversorgungsleitung 8 durch die erste oder zweite Spannungsquelle wird dieser zweite Akkumulator 28b wiederum mit Strom versorgt und ggf. aufgeladen. In einem seltenen Fall, falls beide Spannungsquellen ausfallen sollten, kann dieser zweite Akkumulator 28b als Versorgungseinheit dienen und sowohl den ersten als auch den zweiten Prozessor 23a und 23b mit Strom versorgen, um ebenfalls die Lichtquellen 6a, 6b und / oder 7a, 7b weiter zu betreiben. Dadurch ist ein einheitliches Akkumulatorsystem zur redundanten Versorgung der beiden Prozessoren 23a und 23b vorgesehen. Alternativ zu der Ausgestaltung mittels der zwei Akkumulatoren 28a und 28b ist es jedoch auch möglich, die beiden Stromversorgungsleitungen 5 und 8 nur mit einem gemeinsamen Akkumulator, der dann elektrisch an beiden Stromversorgungsleitungen 5 und 8 angeschlossen wäre.

Die beiden Akkumulatoren 28a und 28b sind innerhalb des gehäuseartigen Leuchtenkörpers 4 (auch als Gehäuse / Leuchtengehäuse bezeichnet) aufgenommen und befestigt / integriert.

## Patentansprüche

1. Operationsleuchte (1) zur Ausleuchtung eines Operationsbereiches, mit einem, zumindest eine erste und eine zweite Leuchteinheit (2, 3) aufnehmenden, gehäuseartigen Leuchtenkörper (4) sowie mit einer ersten Stromversorgungsleitung (5), die zum Zuführen von elektrischem Strom von einer ersten Spannungsquelle zu zumindest einer Lichtquelle (6a, 6b) der ersten Leuchteinheit (2) mit der ersten Leuchteinheit (2) elektrisch verbunden ist, **dadurch gekennzeichnet, dass** die zweite Leuchteinheit (3) des Leuchtenkörpers (4) zumindest eine weitere Lichtquelle (7a, 7b) aufweist und an einer, getrennt zur ersten Stromversorgungsleitung (5) ausgebildeten, zweiten Stromversorgungsleitung (8) elektrisch leitend angeschlossen ist, mittels der eine zweite Spannungsquelle mit der zweiten Leuchteinheit (3) elektrisch verbindbar ist.

2. Operationsleuchte (1) nach Anspruch 1, **dadurch gekennzeichnet, dass** der Leuchtenkörper (4) mit einem translatorisch und / oder rotatorisch bewegbaren Haltearmsystem (13) verbunden ist, wobei innerhalb des Haltearmsystems (13) die erste Stromversorgungsleitung (5) und / oder die zweite Stromversorgungsleitung (8) geführt ist.

3. Operationsleuchte (1) nach Anspruch 2, **dadurch gekennzeichnet, dass** das Haltearmsystem (13) mehrere relativ zueinander bewegbare Halteabschnitte (15, 16, 17) aufweist, wobei zumindest ein zweiter Halteabschnitt (16) mittels eines Drehgelenkes (18) verdrehbar gegenüber einem ersten Halteabschnitt (15) angeordnet ist.

4. Operationsleuchte (1) nach Anspruch 3, **dadurch gekennzeichnet, dass** die erste Stromversorgungsleitung (5) im Bereich des Drehgelenkes (18) ein elektrisch leitendes Koppelelement (20) aufweist und / oder die zweite Stromversorgungsleitung (8) im Bereich des Drehgelenkes (18) ein elektrisch leitendes Koppelelement (21) aufweist.

5. Operationsleuchte (1) nach einem der Ansprüche 1 bis 4, **dadurch gekennzeichnet, dass** die erste Stromversorgungsleitung (5) dreipolig ausgeführt ist.

6. Operationsleuchte (1) nach einem der Ansprüche 1 bis 5, **dadurch gekennzeichnet, dass** die zweite Stromversorgungsleitung (8) dreipolig ausgeführt ist.

7. Operationsleuchte (1) nach einem der Ansprüche 1 bis 6, **dadurch gekennzeichnet, dass** ein erster, einen Prozessor (23a) aufweisender Steuerelektronikbereich (24) mit der ersten Stromversorgungsleitung (5) elektrisch verbunden ist.

8. Operationsleuchte (1) nach Anspruch 7, **dadurch gekennzeichnet, dass** ein zweiter, einen Prozessor (23b) aufweisender Steuerelektronikbereich (25) mit der zweiten Stromversorgungsleitung (8) elektrisch verbunden ist.

9. Operationsleuchte (1) nach Anspruch 8, **dadurch gekennzeichnet, dass** der erste Steuerelektronikbereich (24) und der zweite Steuerelektronikbereich (25) auf einer gemeinsamen Platine (22) angeordnet sind und / oder der erste Steuerelektronikbereich (24) und der zweite Steuerelektronikbereich (25) in dem Leuchtenkörper (4) integriert sind.

10. Operationsleuchte (1) nach Anspruch 8 oder 9, **dadurch gekennzeichnet, dass** der Prozessor (23a) des ersten Steuerelektronikbereiches (24) und / oder der Prozessor (23b) des zweiten Steuerelektronikbereiches (25) mit der zumindest einen Lichtquelle (6a, 6b) der ersten Leuchteinheit (2) elektrisch verbunden ist und / oder mit der zumindest einen Lichtquelle (7a, 7b) der zweiten Leuchteinheit (3) elektrisch verbunden ist.

11. Operationsleuchte (1) nach einem der Ansprüche 8 bis 10, **dadurch gekennzeichnet, dass** der Prozessor (23a) des ersten Steuerelektronikbereiches (24) als ein Slaveprozessor oder als ein Masterprozessor ausgebildet ist und / oder der Prozessor (23b) des zweiten Steuerelektronikbereiches (25) als ein Slaveprozessor oder als ein Masterprozessor ausgebildet ist.

12. Operationsleuchte (1) nach einem der Ansprüche 1 bis 11, **dadurch gekennzeichnet, dass** die erste Stromversorgungsleitung (5) zum Anschluss an die erste Spannungsquelle, etwa eine Netzspannungsquelle oder eine Notstromversorgungsquelle oder eine Schutzkleinspannungsquelle vorbereitet ist.

13. Operationsleuchte (1) nach einem der Ansprüche 1 bis 12, **dadurch gekennzeichnet, dass** die zweite Stromversorgungsleitung (8) zum Anschluss an die zweite Spannungsquelle, etwa eine Netzspannungsquelle oder eine Notstromversorgungsquelle oder eine Schutzkleinspannungsquelle vorbereitet ist.

14. Operationsleuchte (1) nach einem der Ansprüche 1 bis 12, **dadurch gekennzeichnet, dass** mindestens ein Akkumulator (28a, 28b) mit der ersten Stromversorgungsleitung (5) und / oder mit der zweiten Stromversorgungsleitung (8) verbunden ist, wobei der mindestens eine Akkumulator (28a, 28b) vorzugsweise in dem Leuchtenkörper (4) angeordnet ist.

## Claims

1. A surgical light (1) for illuminating an operating area, comprising a housing-like light body (4) which accommodates at least a first and a second light unit (2, 3) and comprising a first power supply line (5) which is electrically connected to the first light unit (2) in order to feed electric current from a first voltage source to at least one light source (6a, 6b) of the first light unit (2), **characterized in that** the second light unit (3) of the light body (4) has at least one further light source (7a, 7b) and is electrically conductively connected to a second power supply line (8), which is separate from the first power supply line (5), wherein by means of the second power supply line a second voltage source can be electrically connected to the second light unit (3).

2. The surgical light (1) according to claim 1, **characterized in that** the light body (4) is connected to a translationally and/or rotationally movable retaining arm system (13), wherein the first power supply line (5) and/or the second power supply line (8) is/are guided inside the retaining arm system (13).

3. The surgical light (1) according to claim 2, **characterized in that** the retaining arm system (13) includes a plurality of retaining portions (15, 16, 17) which are movable relative to each other, wherein at least a second retaining portion (16) is arranged to be rotatable relative to a first retaining portion (15) by means of a pivot joint (18).

4. The surgical light (1) according to claim 3, **characterized in that** the first power supply line (5) includes an electrically conductive coupling element (20) in the area of the pivot joint (18) and/or the second power supply line (8) includes an electrically conductive coupling element (21) in the area of the pivot joint (18).

5. The surgical light (1) according to any one of the claims 1 to 4, **characterized in that** the first power supply line (5) has a three-pole design.

6. The surgical light (1) according to any one of the claims 1 to 5, **characterized in that** the second power supply line (8) has a three-pole design.

7. The surgical light (1) according to any one of the claims 1 to 6, **characterized in that** a first control electronics area (24) including a processor (23a) is electrically connected to the first power supply line (5).

8. The surgical light (1) according to claim 7, **characterized in that** a second control electronics area (25) including a processor (23b) is electrically connected to the second power supply line (8).

9. The surgical light (1) according to claim 8, **characterized in that** the first control electronics area (24) and the second control electronics area (25) are arranged on a joint printed circuit board (22) and/or the first control electronics area (24) and the second control electronics area (25) are integrated in the light body (4).

10. The surgical light (1) according to claim 8 or 9, **characterized in that** the processor (23a) of the first control electronics area (24) and/or the processor (23b) of the second control electronics area (25) is/are electrically connected to the at least one light source (6a, 6b) of the first light unit (2) and/or is/are electrically connected to the at least one light source (7a, 7b) of the second light unit (3).

11. The surgical light (1) according to any one of the claims 8 to 10, **characterized in that** the processor (23a) of the first control electronics area (24) is a slave processor or a master processor and/or the processor (23b) of the second control electronics area (25) is a slave processor or a master processor.

12. The surgical light (1) according to any one of the claims 1 to 11, **characterized in that** the first power supply line (5) is prepared for being connected to the first voltage source such as a mains voltage source or an emergency power supply source or a safety extra-low voltage source.

13. The surgical light (1) according to any one of the claims 1 to 12, **characterized in that** the second power supply line (8) is prepared for being connected to the second voltage source such as a mains voltage source or an emergency power supply source or a safety extra-low voltage source.

14. The surgical light (1) according to any one of the claims 1 to 12, **characterized in that** at least one accumulator (28a, 28b) is connected to the first power supply line (5) and/or to the second power supply line (8), wherein the at least one accumulator (28a, 28b) is preferably arranged within the light body (4).

## Revendications

1. Lampe d'opération (1) pour l'éclairage d'une zone d'opération, comportant un corps de lampe (4) de type boîtier accueillant au moins un premier et un deuxième module d'éclairage (2, 3) ainsi qu'un premier câble d'alimentation électrique (5) qui est relié électriquement au premier module d'éclairage (2) afin d'acheminer le courant électrique depuis une première source de tension vers au moins une source lumineuse (6a, 6b) du premier module d'éclairage (2), **caractérisée en ce que** le deuxième module d'éclairage (3) du corps de lampe (4) présente au moins une autre source lumineuse (7a, 7b) et est raccordé de façon électriquement conductrice à un deuxième câble d'alimentation électrique (8) séparé du premier câble d'alimentation électrique (5), lequel deuxième câble d'alimentation électrique permet de relier électriquement une deuxième source de tension au deuxième module d'éclairage (3).

2. Lampe d'opération (1) selon la revendication 1, **caractérisée en ce que** le corps de lampe (13) est relié à un bras support (13) pouvant être déplacé en translation et/ou en rotation, le premier câble d'alimentation électrique (5) et/ou le deuxième câble d'alimentation électrique (8) passant à l'intérieur du bras support (13).

3. Lampe d'opération (1) selon la revendication 2, **caractérisée en ce que** le bras support (4) présente plusieurs segments supports (15, 16, 17) mobiles l'un par rapport à l'autre, au moins un deuxième segment support (16) étant disposé, de manière à pouvoir pivoter au moyen d'un pivot, par rapport à un premier segment support (15).

4. Lampe d'opération (1) selon la revendication 3, **caractérisée en ce que** le premier câble d'alimentation électrique (5) présente un élément de couplage (20) électriquement conducteur dans la zone du pivot (18) et/ou le deuxième câble d'alimentation électrique (8) présente un élément de couplage électriquement conducteur (21) dans la zone du pivot (18).

5. Lampe d'opération (1) selon l'une quelconque des revendications 1 à 4, **caractérisée en ce que** le premier câble d'alimentation électrique (5) est tripolaire.

6. Lampe d'opération (1) selon l'une quelconque des revendications 1 à 5, **caractérisée en ce que** le deuxième câble d'alimentation électrique (8) est tripolaire.

7. Lampe d'opération (1) selon l'une quelconque des revendications 1 à 6, **caractérisée en ce qu'**une première zone électronique de commande (24) présentant un processeur (23a) est reliée électriquement au premier câble d'alimentation électrique (5).

8. Lampe d'opération (1) selon la revendication 7, **caractérisée en ce qu'**une deuxième zone électronique de commande (25), présentant un processeur (23b), est reliée électriquement au deuxième câble d'alimentation électrique (8).

9. Lampe d'opération (1) selon la revendication 8, **caractérisée en ce que** la première zone électronique de commande (24) et la deuxième zone électronique de commande (25) sont disposées sur une carte (22) commune et/ou la première zone électronique de commande (24) et la deuxième zone électronique de commande (25) sont intégrées dans le corps de lampe (4).

10. Lampe d'opération (1) selon la revendication 8 ou la revendication 9, **caractérisée en ce que** le processeur (23a) de la première zone électronique de commande (24) et/ou le processeur (23b) de la deuxième zone électronique de commande (25) est relié électriquement à l'au moins une source lumineuse (6a, 6b) du premier module d'éclairage (2) et/ou à l'au moins une source lumineuse (7a, 7b) du deuxième module d'éclairage (3).

11. Lampe d'opération (1) selon l'une quelconque des revendications 8 à 10, **caractérisée** en ce le processeur (23a) de la première zone électronique de commande (24) est un processeur esclave ou un processeur maître et/ou le processeur (23b) de la deuxième zone électronique de commande (25) est un processeur esclave ou un processeur maître.

12. Lampe d'opération (1) selon l'une quelconque des revendications 1 à 11, **caractérisée en ce que** le premier câble d'alimentation électrique (5) est préparé pour être raccordé à la première source de tension, à savoir une source de tension de réseau ou une source d'alimentation en courant de secours ou une source de basse tension de protection.

13. Lampe d'opération (1) selon l'une quelconque des revendications 1 à 12, **caractérisée en ce que** le deuxième câble d'alimentation électrique (8) est préparé pour être raccordé à la deuxième source de tension, à savoir une source de tension de réseau ou une source d'alimentation en courant de secours ou une source de basse tension de protection.

14. Lampe d'opération (1) selon l'une quelconque des revendications 1 à 12, **caractérisée en ce qu'**au moins un accumulateur (28a, 28b) est relié au premier câble d'alimentation électrique (5) et/ou au deuxième câble d'alimentation électrique (8), l'au moins un accumulateur (28a, 28b) étant disposé, de préférence, dans le corps de lampe (4).
